# EUROPEAN PATENT APPLICATION

(11) **EP 3 766 331 A1**
(43) Date of publication of application: **20.01.2021**
(21) Application number: 20184744.9
(22) Date of filing: 08.07.2020
(51) Int. Cl.: A01D 41/127, A01B 79/00

(54) **FEDERATED HARVESTER CONTROL**

(30) Priority: 19.07.2019 US 201916517475
(71) Applicant: Deere & Company, Moline, IL 61265 (US)
(72) Inventor: VANDIKE, Nathan R., 68163 Mannheim (DE); GILMORE, Brian J., 68163 Mannheim (DE); PALLA, Bhanu Kiran, 68163 Mannheim (DE)
(74) Representative: Holst, Sönke

(57) **Abstract**

A method may include obtaining first data for at least one operational setting from each of a plurality of harvesters (104). Second data is obtained for at least one harvesting condition variable experienced by each of the plurality of harvesters that was experienced by each of the plurality of harvesters concurrent with operation of the harvesters with the at least one operational setting (108). Third data is obtained for at least one performance parameter achieved by each of the plurality of harvesters operating with the at least one operational setting while experiencing the at least one harvesting condition variable (112). A performance driven operational model for harvester setting adjustment is generated with machine learning based upon the first data, the second data and the third data (116). The operational model is then used to adjust at least one operational setting of a particular harvester experiencing a particular harvesting condition variable (120).

## Description

### BACKGROUND

Harvesters may be used to harvest a variety of crops. Many harvesters operate under the control of an operator who establishes settings for the harvester during harvest. Some harvesters utilize onboard sensors to trigger the adjustment of various operational settings of the harvester based upon operator input thresholds or manufacturer established thresholds.

Disclosed are example methods, controllers and harvesters that implement federated control of individual harvesters. Federated control refers to the control of an individual harvester based upon ongoing performance driven operational models developed through machine learning based upon data obtained from a plurality of other harvesters. Rather than the adjustment of the operation of the harvester being based upon a limited and relatively small amount of data obtained from the individual harvester itself or based upon more generic manufacturer established criteria or thresholds, the adjustment of the harvester is based upon a much larger population of data more pertinent and possibly more timely to the harvesting operations of the harvester of interest, the adjustment being based upon data obtained from a multitude of other similarly situated harvesters. The larger amount of data obtained from the other harvesters provides a more accurate and customized model for establishing adjustment thresholds or triggers for adjusting operational settings of the harvester based upon current harvesting condition variables to optimize performance parameters.

The federated control of each individual harvester may be achieved with cloud-based machine learning. Such machine learning involves a remote computer server and computing system receiving a variety of different data points from various operating harvesters. Each data point may be a performance parameter for a particular harvester which is a function of a particular harvesting condition variable under which the particular harvester operated and a particular operational setting of the particular harvester during the particular harvesting condition variable. In some implementations, each data point may be a performance parameter for a particular harvester which is a function of a set of different concurrent harvesting condition variables under which the particular harvester operated and a set of different particular operational settings of the particular harvester during the harvesting condition variables. In some implementations, each data point may be a set of different performance parameters for a particular harvester which are a function of a set of different concurrent harvesting condition variables under which the particular harvester operated and a set of different operational settings of the particular harvester during the concurrent harvesting condition variables. Machine learning is applied to the data points to associate values for different performance parameters with values for different harvesting condition variables and values for different operational settings.

Machine learning refers to a method of data analysis that automates analytical model building. Such machine learning may be carried out by an expert system that applies artificial intelligence to automatically learn and improve from experience without being specially programmed. Machine learning involves a computer program that may access data and use such data to learn for itself.

One example of machine learning may be splitting the collected data points (described hereafter) randomly into two groups or data sets: a training set and a verification set. In one implementation, the split of the data points between the training and verifications sets may be 50/50, 60/40 or the like to create two effective data sets. The models are created using the training set (the neural network identifying the "relationships" and proper associations) and then tested using the verification set. The data points may be re-grouped and the process may be run again to improve the model if the verification set testing did not achieve the desired accuracy. In this manner, the model can be tested and verified using the data points collected from the other harvesters, and the model then deployed as described in detail hereafter.

In some implementations, different performance driven operational models are developed and customized for particular geographic regions, particular types of crops, particular varieties of crops, particular periods of time, particular types or models of harvesters, particular soil types, particular growing conditions or other criteria. In contrast to generic thresholds established by a manufacturer or possibly guessed by an operator, the distinct customized performance driven operation models provide customized thresholds for triggering the adjustment of operational settings, wherein the customized thresholds more precisely control the timing and extent of operational setting adjustments to better optimize for performance parameters.

By way of example, machine learning, using data from multiple harvesters, may develop a federated control model based upon data points solely received from harvesters operating within a particular geographic region. The federated control model may be based upon data points solely received from harvesters harvesting a particular type or variety of crop. The federated control model may be based upon data points received only from particular types or models of harvesters. The federated control model may be based upon data points only received during a particular window of time or only received from harvesters harvesting crops grown in certain soil types or under particular growing conditions. In some implementations, the federated control model may be based upon data points received only from those harvesters having or operating under a subset of the various harvesting condition variables. For example, the federated control model may be based upon data points received only from a particular type of harvester harvesting a particular type of crop in a particular region during a particular predefined window of time.

Examples of performance parameters which may be optimized based upon operational settings for a given harvesting condition variable, as indicated by a model, include, but are not limited to, grain yield; weed seed promulgation; biomass yield; stubble height; harvester productivity; grain quality; residue quality; lost grain; and fuel efficiency. Harvester productivity refers to the acreage harvested by the harvester during a given period of time. A model may direct the adjustment of operational settings to optimize a single performance parameter or to optimize a set of performance parameters. In some implementations, each performance parameter of the set of performance parameters may be assigned a different weight, a prioritization or a degree of importance, wherein the weight controls in circumstances where the optimization of multiple performance parameters may be competing with one another for different operational setting adjustments.

Examples of operational settings that may be adjusted pursuant to an individual model include, but are not limited to one or more of, header height; harvester speed, threshing speed, separating speed, threshing clearance, cleaning fan speed; chaffer positions, sieve positions, feed rate, reel position, reel speed, header belt speeds, deck plate positions, header speeds, chopper speed, chopper counter knife position, spreader speeds, and spreader vane positions.

Examples of various harvesting condition variables that may be used as a basis for adjusting an operational setting or multiple operational settings to optimize a performance parameter or a group performance parameters include, but are not limited to, one or more of grain moisture; temperature; humidity; wind speed; wind direction; harvester roll; harvester pitch; current grain yield; current biomass yield; crop type; crop variety; soil moisture; soil type; row spacing; weed type; weed density, crop height, crop downstate, time of day, and sun angle.

Disclosed is an example federated harvester control method. The method may include obtaining first data for at least one operational setting from each of a plurality of harvesters. Second data is obtained for at least one harvesting condition variable experienced by each of the plurality of harvesters that was experienced by each of the plurality of harvesters concurrent with operation of the harvesters with the at least one operational setting. Third data is obtained for at least one performance parameter achieved by each of the plurality of harvesters operating with the at least one operational setting while experiencing the at least one harvesting condition variable. A performance driven operational model for harvester setting adjustment in response to harvesting condition variables is generated with machine learning based upon the first data, the second data and the third data. The operational model is then used to adjust at least one operational setting of a particular harvester experiencing a particular harvesting condition variable.

Disclosed is an example federated harvester controller. The controller comprises a non-transitory machine or computer-readable medium containing instructions. The instructions are to direct a processing unit to obtain a plurality of data points from a plurality of different harvesters, each of the data points comprising at least one performance parameter, at least one associated harvesting condition variable and at least one operational setting, wherein the at least one performance parameter was achieved by the harvester while operating at the at least one operating setting under the at least one harvesting condition variable. The instructions further direct the processing unit to use of machine learning to generate a performance driven operational model for harvester setting adjustment in response to harvesting condition variables based upon the plurality of data points. The instructions further direct the processing unit to transmit the operational model to an operational setting controller of a particular harvester for use in adjusting a setting of the particular harvester experiencing a particular harvesting condition variable.

Disclosed is an example harvester under federated control. The harvester may comprise a header comprising a plurality of interacting crop gathering components for gathering a crop from the growing medium, a separation unit comprising a plurality of interacting crop separation components for separating a targeted portion of the gathered crop from a non-targeted portion of the gathered crop and a controller to adjust at least one component of the crop gathering components and the crop separation components based upon a performance driven operational model generated through machine learning based upon operational setting data, harvesting condition variable data and performance data obtained from a plurality of other harvesters.

### BRIEF DESCRIPTION OF THE DRAWINGS

Figure 1 is a block diagram illustrating portions of an example federated harvester control system.
Figure 2 is a flow diagram of an example federated harvester control method.
Figure 3 is a block diagram schematically illustrating portions of an the operations of an example federated harvester control system.
Figure 4 is a side view illustrating portions of an example federated harvester control system.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

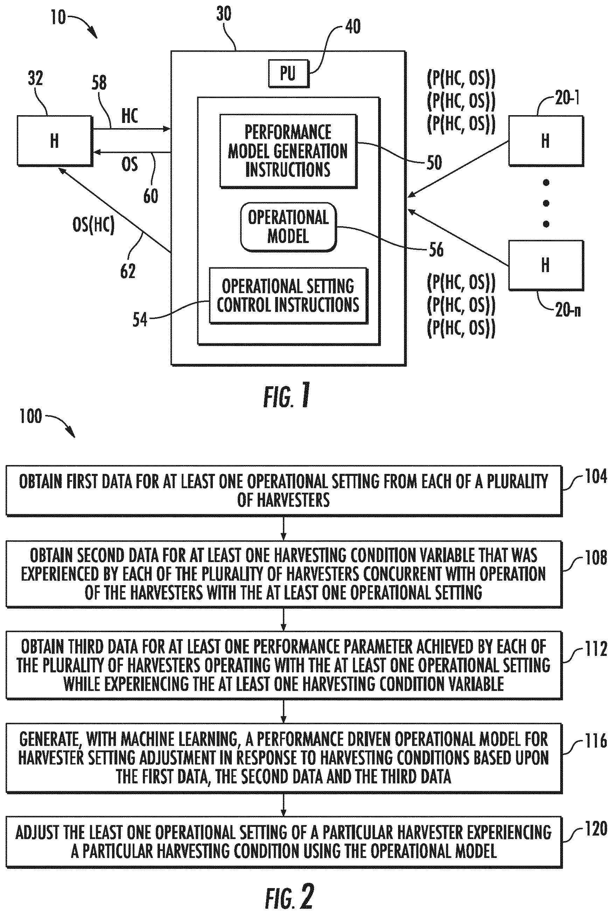

Figure 1 is a block diagram schematically illustrating portions of an example federated harvester control system 10. System 10 facilitates the adjustment of operational settings of an individual harvester based upon an operational model providing adjustment thresholds for the operational settings, the adjustment thresholds of the model being generated through machine learning using a large population of data points obtained from a plurality of other harvesters. System 20 comprises a plurality of harvesters including harvesters 20-1 to 20-n (collectively referred to as harvesters 20), central harvester control system 30 and controlled harvester 32.

Harvesters 20 and controlled harvester 32 comprise agricultural machines that separate crop plants from a growing medium and that processes separated crop plants. Such processing of the crop plants may involve threshing of the crop plants, separating grain from material other than grain (MOG) and cleaning the grain by further removing MOG residue such as chaff from the separated grain. Such harvesters may include a rotary thresher or a straw walker that initially separates the grain from the MOG and a collection of underlying chaffers and sieves that substantially filter and blow the lighter MOG rearwardly for discharge as the heavier grain passes through openings in the chaffers and sieves.

In the example illustrated, harvesters 20 transmit data points to central harvester control system 30 for generation of performance driven operational models and/or operational setting adjustment thresholds for harvester 32. It should be appreciated that each of the set of harvesters 20 and 32 may provide data points to system 30 for generation of operational models that may be utilized to adjust operational settings for any of the other harvesters, including both harvesters 20 and harvester 32. Said another way, all of the harvesters 20 and 32 contribute data points for the generation of an model that establishes operational setting adjustment or trigger points and all of the harshest 20 and 32 utilize the operational setting adjustment thresholds or trigger points. Such data points may be transmitted in a wireless fashion from each of harvesters 20 and 32 to system 30 using wireless transceivers carried by each of such harvesters and a wireless communication network. As a result, such collection of data points by system 30 and the generation of the operational models for adjusting control thresholds may be carried out in real time across the multiple harvesters 20 and 32.

The data points transmitted from each of harvesters 20 (and 32) to system 30 each comprise a set of data comprising a value for a performance parameter (P) achieved by the particular harvester and the associated harvesting condition variable (HC) and operational setting(OS) that were in existence or that were in use for the particular harvester at the same time that the value for the performance parameter was achieved. For example, one example data point may comprise the cleaning blower speed (the operational setting) and the temperature (harvesting condition variable) for particular harvester that resulted in the particular harvester having a particular degree of grain loss (the performance parameter). Each of the harvesters 20 may provide similar data points including their respective cleaning blower speeds, temperatures and grain loss values, wherein system 30 may use such data to generate a model correlating cleaning blower speed and temperature to grain loss and wherein the model may establish thresholds for adjusting the blower speed for a given temperature to optimize (reduce) grain loss. The data points transmitted to system 30 from the various harvesters 20 may comprise sets of values for various combinations of operational settings and harvesting condition variables along with the associated performance parameter.

In some implementations, the values for the performance parameter, harvesting condition variable and operational setting in each data point or set of data may comprise numerical values. In other implementations, the data points may have values in the form of a relationships between multiple harvesting conditions, multiple operational settings, multiple performance parameters. For example, rather than a data point having a performance parameter value as a function of a particular harvesting condition value, a data point may have a first performance value as a function of relationship of a first particular harvesting condition value to a second particular harvesting condition value. A data point may have a performance parameter value as a function of a relationship of the first operational setting value with respect to a second different operational setting value for the harvester. In some implementations, data points may have a performance parameter value as a function of a relationship of at least one operational setting value with respect to at least one harvesting condition variable value.

Examples of performance parameters which may be optimized based upon operational settings for a given harvesting condition variable, as indicated by a model, include, but are not limited to, weed seed promulgation; biomass yield; stubble height; harvester productivity; grain quality; residue quality; lost grain; and fuel efficiency. It should be appreciated that particular performance parameters, in some implementations, may concurrently serve as harvesting condition variable parameters for optimizing other performance parameters.

Examples of operational settings that may be adjusted pursuant to an individual model include, but are not limited to one or more of, header height; harvester speed, threshing speed, separating speed, threshing clearance, cleaning fan speed; chaffer positions, sieve positions, feed rate, reel position, reel speed, header belt speeds, deck plate positions, grain yield, header speeds, chopper speed, chopper counter knife position, spreader speeds, and spreader vane positions. Such operational settings may be either input by an operator, established by the operational setting controller of the harvester or sensed/detected by various sensors on the harvester.

Examples of various harvesting condition variables that may be used as a basis for adjusting an operational setting or multiple operational settings to optimize a performance parameter or a group performance parameters include, but are not limited to, one or more of grain moisture; biomass moisture, temperature; humidity, wind speed; wind direction; harvester roll; harvester pitch; current grain yield; current biomass yield; crop type; crop variety; soil moisture; soil type; row spacing; weed type; weed density, crop height, plant health index, grain constituent levels, crop downstate, time of day, and sun angle. Such harvesting condition variables may be either input by an operator, sensed/detected by various sensors on the harvester or retrieved or obtained from a source or sensor external to the harvester. In some implementations, the harvester may retrieve particular harvesting condition variables specific to the harvester, such as the local temperature, wind speed or wind direction, time of day, sun angle or the like, from a private or public Internet source.

In some implementations, the data points transmitted from each of harvesters 20 (and 32) to system 30 each comprise a set of data or values comprising a value for a performance parameter (P) achieved by the particular harvester and values for multiple different associated harvesting condition variables (HC) and an operational setting (OS) that were in existence or that were in use for the particular harvester at the same time that the value for the performance parameter was achieved. In some implementations, the data points each comprise a set of values comprising a value for a performance parameter achieved by the particular harvester, and value for a harvesting condition variable and values for multiple different operational settings of the harvester occurred or were in use for the particular harvester at the same time that the value for the performance parameter was achieved. In some implementations, the data points each comprise a set of values or a performance parameter achieved by the particular harvester and multiple values for multiple different operational settings and multiple different harvesting condition variables that were in existence or that were used by the particular harvester at the time that the value for the performance parameter was achieved. In such implementations, the performance parameter is a performance parameter to be optimized by the model that is to be based upon such data points.

In some implementations, the model to be generated using such data points is to optimize the values for multiple performance parameters. In such an implementation, the data points transmitted from each of harvesters 20 (and 32) to system 30 may each comprise a set of data or values comprising multiple values for multiple different performance parameter (P) achieved by the particular harvester and the associated harvesting condition variable (HC) and operational setting (OS) that were in existence or that were in use for the particular harvester at the same time that the values for the performance parameters were achieved. For example, one example data point may comprise the cleaning blower speed (the operational setting) and the temperature (harvesting condition variable) for particular harvester that resulted in the particular harvester having a particular degree of grain loss (a first performance parameter to be optimized) and the first value for grain quality (the second performance value to be optimized). Each of the harvesters 20 may provide similar data points including their respective cleaning blower speeds, temperatures and screen loss values, wherein system 30 may use such data to generate a model correlating cleaning blower speed and temperature to grain loss and grain quality and wherein the model may establish thresholds for adjusting the blower speed for a given temperature to optimize (reduce) grain loss and enhance grain quality (which may be based upon grain cleanliness (the absence of MOG) and/or a lower level of broken grain).

The data points transmitted to system 30 from the various harvesters 20 may comprise sets of values for various combinations of operational settings and harvesting condition variables along with the associated performance parameters that are be to be optimized by an operational settings controller of a harvester using operational setting adjustment thresholds obtained from or derived from the generated model. In some implementations, the data points each comprise a set of values comprising a different values for multiple different performance parameters achieved by the particular harvester, a value for a harvesting condition variable and values for multiple different operational settings of the harvester occurred or were in use for the particular harvester at the same time that the values for the performance parameters were achieved. In some implementations, the data points each comprise a set of values comprising a different values for multiple different performance parameters achieved by the particular harvester, multiple values for multiple different harvesting condition variables and value for an operational setting of the harvester that occurred or were in use for the particular harvester at the same time that the values for the performance parameters were achieved. In some implementations, the data points each comprise a set of values comprising the multiple different values for the performance parameters achieved by the particular harvester and multiple values for multiple different operational settings and multiple different harvesting condition variables that were in existence or that were used by the particular harvester at the time that the values for the performance parameters were achieved.

Central harvester control system 30 generates performance driven operational models for harvester 32 (as well as harvesters 20) using the data points received from harvesters 20 (and harvester 32). Such operational models serve as a basis for generating or deriving customized dynamic thresholds for triggering the adjustment of operational settings of harvester 32 (or harvesters 20). System 30 comprises processing unit 40 and a non-transitory machine-readable medium 42. Processing unit 40 comprises logic elements or other electronic circuitry that carries out instructions stored and provided by non-transitory machine-readable medium 42. Although system 30 is illustrated as a single processing unit 40 and a single medium 42, should be appreciated that system 30 may be distributed amongst multiple different processing units and non-transitory machine-readable mediums which cooperate with one another to carry out the functions of system 30.

Non-transitory machine-readable medium 42 (also referred to as a non-transitory computer-readable medium) may be in the form of a hard drive, flash drives, storage class memory or other non-volatile memory that stores instructions for directing the operation of processing unit 40. Medium 42 may further serve as a storage space for storing the generated operational models and other data received by our generated by system 30. Medium 42 comprises performance model generation instructions 50 and operational setting control instructions 54.

Performance model generation instructions 50 direct processing unit 40 to obtain the data points from harvesters 20 and, with machine learning, generate performance driven operational models 56 for harvester 32 (and potentially harvesters 20) using such data points. In some implementations, system 30 comprises a neural network that carries out such machine learning. The generated models serve as a basis for the establishment of dynamic and customized operational setting adjustment triggering thresholds used by harvester 32 in response to changing harvesting condition variables. In the example illustrated, the operational models 56 generated by system 30 are stored in medium 42 and are subsequently transmitted to harvester 32 (and potentially harvesters 20). In other implementations, the operational model 56, upon generation, are transmitted to the various harvesters to be controlled by the federated control system 10.

In some implementations, instructions 50 direct processing unit 40 to develop different performance driven operational models that are customized for particular geographic regions, particular types of crops, particular varieties of crops, particular periods of time, particular types or models of harvesters, particular soil types, particular growing conditions or other criteria. In contrast to generic thresholds established by a manufacturer or possibly guessed by an operator, the distinct customized performance driven operation models provide customized thresholds for triggering the adjustment of operational settings, wherein the customized thresholds more precisely control the timing and extent of operational setting adjustments to better optimize for performance parameters.

By way of example, instructions 50 may direct processing unit 40 to use machine learning to use data from multiple harvesters to develop an individual federated control model based upon data points solely received from harvesters operating within a particular geographic region. The federated control model may be based upon data points solely received from harvesters harvesting a particular type or variety of crop. The federated control model may be based upon data points received only from particular types or models of harvesters. The federated control model may be based upon data points only received during a particular window of time or only received from harvesters harvesting crops grown in certain soil types or under particular growing conditions. In some implementations, the federated control model may be based upon data points received only from those harvesters having or operating under a subset of the various harvesting condition variables. For example, the federated control model may be based upon data points received only from a particular type of harvester harvesting a particular type of crop in a particular region during a particular predefined window of time. In such implementations, instructions 50 may prefilter the data points received from harvesters 20 based the above criteria, wherein each model that is generated is based solely upon data points that satisfy particular criteria associated with the model.

For example, in one implementation, an individual model that is to be used for adjusting operational settings of the harvester 32 operating at a certain point in time may be based solely upon data points received from harvesters 20 during a window of time containing the certain point in time. In one implementation, the window of time may be a harvesting season. In another implementation, the window of time may be a shorter portion of the harvesting season, such as one day, one week, two weeks, four weeks or a month. For example, the generation of a model from which operational setting adjustment triggering thresholds are to be derived for adjustment of a harvester operating on August 1 may be generated based solely upon data points received from harvesters 20 that were operating during the month of July where the "freshness" of the model is based upon data that is no older than one month. In some implementations, individual models may be assigned a "freshness" date, indicating the last date for which operational setting adjustment triggering values derived from the model may be relied upon. The described example may be equally applied using other criteria other than a time window such as the criteria above including, but not limited to, type or variety of crop, geographic region, type or model of harvester, or any of the above described harvesting condition variables.

In some implementations, different data points or sets of data used to form the model or to establish an operational setting adjustment trigger or threshold value may be differently weighted based upon the age of such data points. For example, data points older in time may be giving a lesser weight as compared to data points received or acquired more recently. Although the data used to establish a model establish a threshold value is acquired across a wide range of time, data more recently acquired while a larger impact upon the model or thresholds.

In some implementations, different data points or sets of data used to form the model or to establish an operational setting adjustment trigger or threshold value may be differently weighted based upon the geographic location at which the data was obtained. In some implementations, different data points or sets of data used to form the model or to establish an operational setting adjustment trigger or threshold value may be differently weighted based upon the proximity of the geographic location at which the data was obtained relative to the geographic location of the harvester requesting a model, requesting the operational setting adjustment trigger or threshold value or determining the model or the operational setting adjustment trigger or threshold value. Even though the exact same sets of data are used, different models or determining operational setting adjustment triggers or thresholds (for a given harvesting condition) may be generated depending upon the geographic location of the harvester that is going to use the model or thresholds. For example, a first harvester operating in a first geographic region may generate or request a model or operational setting adjustment thresholds, wherein the model or thresholds are formed or determined based upon a set of data points obtained from harvesters operating in different geographic locations, wherein the model generated or received by the first harvester may be based upon a larger weighting applied to those particular data points that originated from harvesters operating in geographic regions or locations closer to the first geographic region. At the same time, a second harvester (a different harvester or the first harvester later operating in a second geographic region) operating in a second geographic region may generate or request a model or operational setting adjustment thresholds, wherein the model or thresholds are formed or determined based upon a set of data points obtained from harvesters operating in different geographic locations, wherein the model generated or received by the second harvester may assign a larger weighting to those particular data points that originated from harvesters operating in geographic regions or locations closer to the second geographic region. Due to the different weightings, the first harvester and the second harvester may differently adjust operation settings for a given harvesting condition due to the different models resulting from the different weightings applied to the same data points that form the different models.

As discussed above, in some implementations, an individual data point may comprise values for multiple different performance parameters, multiple different harvesting condition variables and/or multiple different operational settings concurrently achieved or experienced by an individual harvester. In such implementations, instructions 50 may direct processing unit 40 to differently weight different values. In some implementations, different harvesting condition variables may be up assigned different weights based upon their predetermined impact or effect upon the particular performance parameter or group of performance parameters being optimized. Likewise, in some implementations, different operational settings may be assigned different weights based upon their predetermined impact or effect upon the particular performance parameter or group of performance parameters being optimized. For example, it may be determined, through empirical studies or prior analysis by system 30 that a particular harvesting condition variable, such as grain moisture, may have a larger impact or effect upon grain quality as compared to a different harvesting condition variable. In such an implementation, values pertain to grain moisture may be given a larger weight value as compared to the different harvesting condition variable. It may be determined, through empirical studies or prior analysis by system 30, that a particular operational setting, such as the speed of the blower, may have a larger impact or effect upon grain quality as compared to a different operational setting. In such implementations, values pertaining to the speed of the blower may have a greater assigned weight as compared to the different operational setting.

In some implementations, each performance parameter of the set of performance parameters may be assigned a different weight, a prioritization or a degree of importance, wherein the weight controls in circumstances where the optimization of multiple performance parameters may be competing with one another for different operational setting adjustments with a given harvesting condition variable or set of harvesting condition variables. In such implementations, the weights assigned to the performance parameters may be input by a manager or an operator based upon the manager's or operator's performance objectives. For example, an operator may place a higher importance on grain quality, clean grain, as compared to grain loss. In such a circumstance, the operator may sign a greater weight to the grain quality performance parameter and a lower weight to the grain loss performance parameter.

Operational setting control instructions 54 use the generated models to identify harvesting condition variable thresholds for the adjustment of operational settings of a harvester. Instructions 64 direct processing unit 40 to derive thresholds or triggers for making an adjustment to an operational setting or a group of operational settings based upon a current harvesting condition variable for us to optimize a particular performance parameter or a group of performance parameters. For example, an example model may correlate lower speed and crop moisture/grain moisture to grain quality. The particular model may indicate that for a given grain moisture, the blower directing air through the chaffer and sieve should be set at a particular speed to optimize grain quality. In such a circumstance, instructions 54 may determine or identify, from the model, the given grain moisture at which the blower should be adjusted to the particular speed to optimize grain quality. The adjustment triggering grain moisture harvesting condition variable derived from the model may be transmitted to a harvester, wherein the harvester, upon sensing or otherwise receiving signals indicating that the given grain moisture is occurring, automatically adjusts the speed of its blower to the particular speed.

As shown by Figure 1, harvester 32 transmits the values for its harvesting condition variable or conditions (HC) to system 30 as indicated by arrow 58, wherein system 30 compares the current harvesting condition variable value of harvester 32 to the identified threshold and outputs operational setting adjustment instructions to harvester 32 as indicated by arrow 60. In other implementations, system 30 provides harvester 32 with the identified operational adjustment triggers or thresholds as indicated by arrow 62 (the operational setting as a function of harvesting condition variable (OS (HC)), wherein the harvester compares its current harvesting condition variables to the threshold and carries out the adjustment to at least one operational setting of the harvester. In yet other implementations, system 30 provides harvester 32 with the generated operational model 56, wherein instructions 54 are located on harvester 32 with the instructions directing a local processing unit on the harvester 32 to carry out the identification of operational setting adjustment threshold or triggers (OS(HC)) from the model 56 as well as the adjustment of operational settings using the identified threshold or triggers in the current existing harvesting condition variables experienced by harvester 32.

Figure 2 is a flow diagram of an example federated harvester control method 100 for adjusting the operational settings of a harvester based upon a model generated, through machine learning, from a pool of data received from a multitude of other harvesters. Method 100 is described in the context of being carried out by system 10. It should be appreciated that method 100 may likewise be carried out by other federated harvester control systems or other harvesters described hereafter or similar to that described implementations.

As indicated by block 104, system 30 obtains first data for at least one operational setting from each of the plurality of harvesters 20. In one implementation, system 30 may poll harvesters 20. In another implementation, harvesters 20 may supply the first data (value(s)) for at least one operational setting at predetermined times or time intervals. Example operational settings are described above.

As indicated by block 108, system 30 obtains a second set of data for at least one harvesting condition variable that was experienced by each of the plurality of harvesters concurrent with the operation of the harvesters with the at least one operational per setting.

As indicated by block 112, system 30 obtains third data for at least one performance parameter achieved by each of the plurality of harvesters 20 operating with the at least one operational setting while also experiencing the at least one harvesting condition variable. In other words, system 30 obtains data sets from each of harvesters 20, where each data set comprises a value for an operational setting and a value for the harvesting condition that may have contributed to achieving the associated or corresponding value for the performance parameter. As discussed above, in some implementations, each data set may comprise values for multiple different performance parameters, multiple different harvesting conditions and multiple different operational settings that may have coexisted for a harvester 20.

As indicated by block 116, performance model generation instructions 50 direct processing unit 40 to generate, with machine learning, a performance driven operational model 56 for harvester setting adjustment in response to harvesting conditions based upon the first data, the second data and the third data. As indicated by block 120, operational setting control instructions 54 identify operational setting adjustment thresholds or triggers for adjusting at least one operational setting to optimize at least one performance parameter for a given harvesting condition. Using such thresholds, harvester 30 adjusts at least one operational setting in response to experiencing a particular harvesting condition, using the operational model and/or the adjustment thresholds or triggers identified from or derived from the operational model.

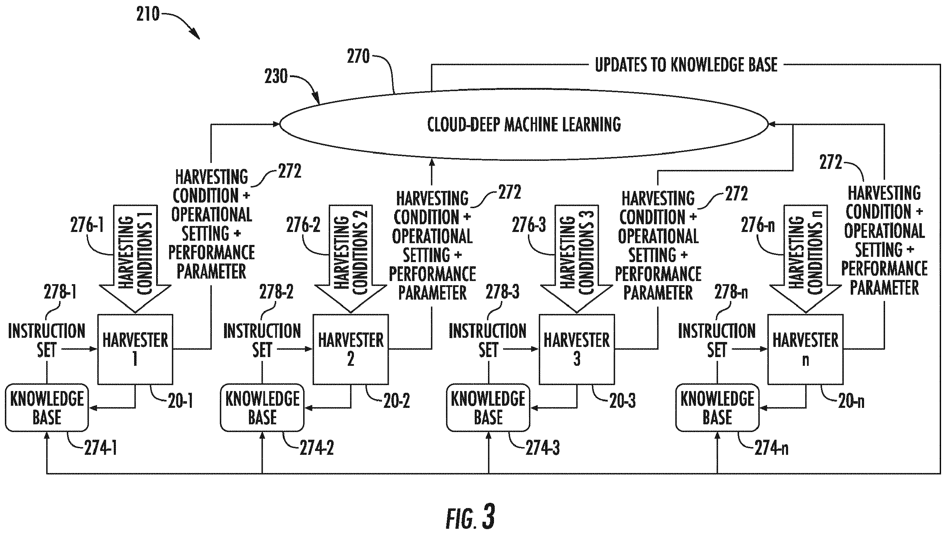

Figure 3 is a block diagram schematically illustrating portions of another example federated harvester control system 210. Figure 3 additionally illustrates the flow of data with system 210. System 210 comprises harvesters 20-1, 20-2, 20-3 ... 20-n (collectively referred to as harvesters 20), and central harvester control system 230. Harvesters 20 are described above. In the example illustrated, each of harvesters 20 provides data points to central control system 230 and adjusts its individual operational settings based upon the performance driven operational model provided by system 230 and/or the operational setting adjustment threshold provided by or derived from the operational model.

As schematically represented in Figure 3, central harvester control system 230 comprises a centralized computing unit or system which carries out cloud-deep machine learning 270 using the various data sets or data points 272 received from each of harvesters 20. Each of the data points 272 comprises values for at least one harvesting condition/harvesting condition variable, values for at least one operational setting in values for at least one performance parameter. Such machine learning 270 results in the generation of performance driven operational models for harvester setting adjustments that are to be made in response to values for associated harvesting condition variables. The performance driven operational models provide operational setting adjustment threshold or triggers based upon existing harvesting conditions or harvesting condition variables. The models and/or triggers are output to a knowledge base 274-1, 274-2, 274-3 and 274-n associated with each of the harvesters 20.

As further schematically represented in Figure 3, each of harvesters 20 monitors its respective individual harvesting conditions, 276-1, 276-2, 276-3 and 276-n (collectively referred to as harvesting conditions 276) which may be different from one another. Based upon the individual harvesting conditions 276 in the model or threshold provided in the respective knowledge bases 274, individualized instruction sets 278-1, 278-2, 270-3 ... 278-n are generated adjusting at least one operational setting. Such adjustment may result in new values for performance parameters. These new values for the performance parameters along with the at least one adjusted operational setting in the harvesting conditions are once again uploaded to the central system 230 which may further adjust the performance driven operational model for harvesting setting adjustment. As a result, such closed-loop feedback iterations facilitate the cloud-deep machine learning and the continual updating of the performance driven operational model for harvester setting adjustment and/or the operational setting adjustment thresholds to better identify the precise harvesting condition variable thresholds or harvesting condition variable values for triggering the adjustment of at least one operational setting. In some circumstances, a first value for particular harvesting condition variable may trigger the adjustment of a first operational setting while a second different value for the same particular harvesting condition variable may trigger the adjustment of a second different operational setting. In some circumstances, a first value for a first harvesting condition variable may trigger the adjustment of a first operational setting while a second value for a different harvesting condition variable a trigger the adjustment of a second different operational setting of the harvester.

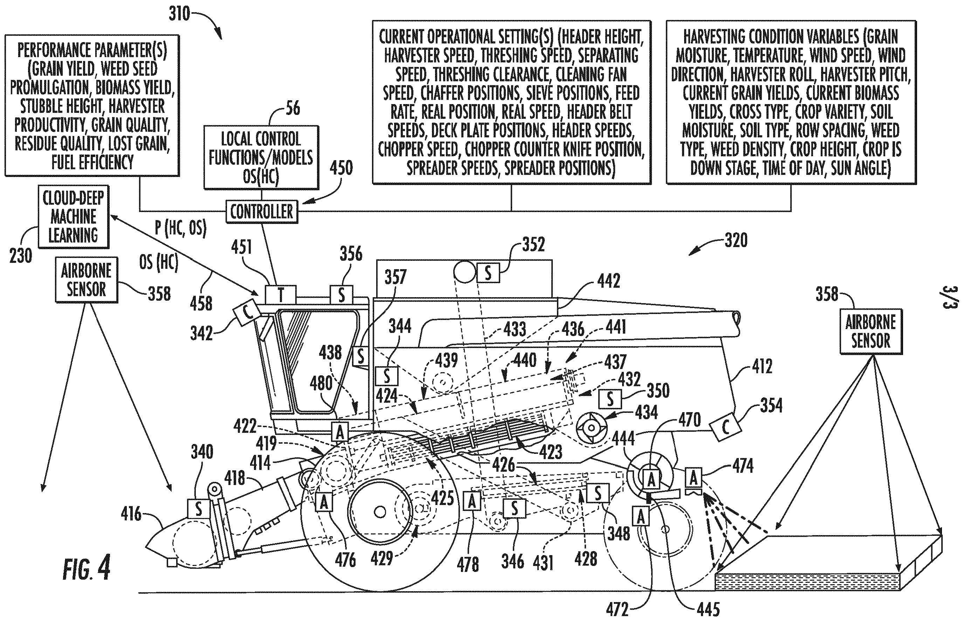

Figure 4 is a diagram schematically illustrating an example federated harvester control system 310. System 310 comprises harvesters 320, one of which is specifically shown, and a central or central harvester control system 230 (described above). Harvesters 320 may be similar to one another. Each of harvester 320 may comprise a main frame 412 having wheeled structure including front and rear ground engaging wheels 414 and 415 supporting the main frame for forward movement over a field of crop to be harvested. The front wheels 414 are driven by an electronically controlled hydrostatic transmission.

A vertically adjustable header or harvesting platform 416 is used for harvesting a crop and directing it to a feeder house 418. The feeder house 418 is pivotally connected to the frame 412 and includes a conveyor for conveying the harvested crop to a beater 419. The beater 419 directs the crop upwardly through an inlet transition section 422 to a rotary threshing assembly 424. In other implementations, other orientations and types of cleaning structures and other types of headers 416, such as transverse frame supporting individual row units, are utilized.

The rotary threshing assembly 224 threshes and separates the harvested crop material. Grain and crop residue, such as chaff, fall through a concave 425 and separation grates 423 on the bottom of the assembly 424 to a cleaning and separation system 426, and are cleaned by a chaffer and/or sieve 428 and air fan or blower 429. The blower 429 blows the lighter crop residue above the sieve 228 rearwardly for discharge. The grain passes through openings, between louvers, provided by the sieve 428. The clean grain is directed to elevator 433. Clean grain elevator 433 conveys the grain to tank 442. The clean grain in the tank 442 can be unloaded into a grain cart or truck by unloading auger. Tailings fall into the return elevator or auger 431 and are conveyed to the rotor 437 where they are threshed a second time.

Threshed and separated straw is discharged from the rotary cleaning and cleaning assembly 424 through an outlet 432 to a discharge beater 434. In one implementation, the discharge beater 434, in turn, propels the straw to the rotary chopper 444 which chops the straw and other residue before directing the straw and other residue to separator 446. The rotary chopper 444 may have blades that are rotated relative to a set of chopper counter knives 445 which may have various positions relative to the chopper 444 that are adjustable by an actuator. In some implementations where the straw is chopped by chopper 444, discharge beater 434 may be omitted or other mechanism may be used to direct the straw to rotary chopper 444. In yet other implementations, the discharge beater 434 may direct the straw to a discharge outlet above spreader 446, wherein the straw is not chopped prior to being discharged from the rear of combine harvester 410 by spreader 446. The operation of the combine is controlled from an operator's cab 435.

In the example illustrated, the rotary threshing assembly 424 comprises a cylindrical rotor housing 436 and a rotor 437 located inside the housing 436. The front part of the rotor and the rotor housing define the infeed section 438. Downstream from the infeed section 438 are the cleaning section 439, the cleaning section 440 and the discharge section 441. The rotor 437 in the infeed section 438 is provided with a conical rotor drum having helical infeed elements for engaging harvested crop material received from the beater 419 and inlet transition section 422.

In the cleaning section 439, the rotor 437 comprises a cylindrical rotor drum having a number of cleaning elements, sometimes called rasping bars, for cleaning the harvested crop material received from the infeed section 438. Downstream from the cleaning section 439 is the cleaning section 440 wherein the grain trapped in the threshed crop material is released and falls to the chaffer/sieve 428.

As further shown by Figure 4, system 310 comprises multiple sensors for collecting values for performance parameters, values for current operational settings and values for harvesting condition variables. In the example illustrated, system 410 additionally comprises sensors 340, 342, 344, 346, 348, 350, 352, 354, 356 and 358. Sensor 340 senses the impact of crops or portions of crops against portions of header 416, wherein the sensed impact is used to indicate grain yield which may serve as a performance parameter or a harvesting condition. In one implementation, sensor 340 characterizes accelerometer would senses the impact or vibration brought on by the impact of an ear of corn or other crop grains.

Sensor 342 comprise a sensor in the form of a camera (c) that captures images of crops in front of harvester 320 is before being interacted upon by harvester 320 or after such initial interaction. In one implementation, sensor 342 may comprise LIDAR. In other implementations, the camera may comprise a still camera, a thermal imaging camera or other forms of the camera. The images are values output by sensors 342 may indicate grain yield, reel position, reel speed, header belt speeds, deck plate positions, header speeds, harvester roll, harvester pitch, crop variety, crop type, row spacing, weed type, weed density, crop height, crop downstate, ground conditions or the like.

Sensor 344 comprises a sensor, such as photo emitter-detector pair, potentiometer, camera or other sensor that detects operational settings such as rotor speed, rotor great, concave or screen positioning, biomass yield, and the like. Sensor 346 comprise a sensor such as a camera, emitter-detector pair or the like supported below the chaffer/sieve 428 to output signals that may be used to determine or estimate grain quality, chaffer/sieve performance, threshing performance and the like.

Sensor 348 comprise a sensor such as a camera, emitter-detector pair or the like that senses the straw, chaffer other residue being blown from the chaffer/sieve 428 towards the rear of harvester 324 discharge. Sensor 348 may output signals that may be used to determine biomass yield, weed type, weed density, sieve/chaffer performance, grain loss, threshing performance and the like. Sensor 350 comprise a sensor supported by harvester 320 adjust to sense the residue being ejected from the rear of the rotor. Signals from sensor 350 may assist in indicating weed type, current biomass yield and the like.

Sensor 352 senses grain being discharged into a grain tank. In one implementation, sensor 352 comprises an impact plate against which grain strikes. Another implementation, sensor 352 may comprise a camera focus on the grain within the grain tank. Sensor 352 may assist in indicating grain yield and/or grain quality.

Sensor 354 comprise a sensor supported a rear of harvester 320. In one implementation, sensor 354 comprises a camera. Another implementation, sensor four comprises a thermal imager. Sensor 354 may be focused on the crop residue being discharged by spreader or after the residue has been deposited upon the ground. Sensor 354 may additionally or alternatively be focused on the stubble on the ground prior to deposition of residue. Sensor 354 may output signals that may assist determining current biomass yield, loss grain, stubble height and biomass yield.

Sensor 356 comprise a sensor carried by harvester 320 that senses various environmental conditions such as wind speed, wind direction, sun angle, harvester roll, harvester pitch, temperature, humidity. In the example illustrated, other values for operational settings may be obtained directly from the controller of harvester 320 which establishes such operational settings such as header height, harvester speed, threshing speed, separating speed, threshing clearance, cleaning fan speed, chafer positions, sieve positions, feed rate, reel position, reel speed, header belt speeds, deck plate positions, header speeds, chopper speed, chopper counter knife position, spreader speeds and spreader vane positions. In some implementations, each of these operational settings may additionally have an associated sensor that senses the actual value for the particular operational setting, wherein the actual settings may sometimes differ from the intended setting as established by the control signals output by the controller.

Sensor 357 comprise a sensor that detects the level of fuel or consumption of fuel by harvester 320. The signals indicating fuel consumption may be used in combination with GPS signals to indicate fuel efficiency. In some implementations, fuel efficiency may also be calculated as a function of the amount of grain harvested per volume of fuel consumed.

In the example illustrated, a controller of harvester 320 may be additionally be configured to retrieve various local harvesting conditions for the particular harvester from external data sources through wireless network or connection. For example, the controller of harvester 320 may retrieve local data or the specific harvester such as wind speed, wind direction, temperature, humidity, time of day, humidity, sun angle, soil type, soil moisture and the like. Such values may have been previously acquired (within a predefined time window relative to the current time of harvesting) and stored in a remote, wirelessly accessible database prior to being retrieved by harvester 320. In some implementations, the data may additionally or alternatively be directly retrieved from the remote data source by system 230.

Sensor 358 comprises an airborne sensor that may obtain values for various performance parameters, operational settings and/or harvesting conditions. Sensor 358 may be in the form of a satellite, drone, plane or other airborne device and a capture portion of the field immediately forward or immediately rearward of harvester 320 as harvester 320 is crossing a field during harvest. In some implementations, airborne sensor 358 may capture images of a field well before or well after harvesting, wherein the obtained data stored in a database for retrieval by harvester 320 or system 230. Sensor 358 may transmit data to harvester 320 in real time or may store capture data in a database from which the data may be retrieved by harvester 320 or system 230. Examples of data that may be acquired by sensors 358 include, but are not limited to, stubble height, weed types, weed density, biomass yield, discharged residue spread, crop type, crop variety, harvester speed, reel position, and crop downstate.

As further shown by Figure 4, harvester 320 includes various actuators to carry out adjustments to the operational settings of harvester 320 in response to the control signals from controller450 that are based upon the model or operational setting adjustment triggers provided by system 230. For example, based upon the received model or operator setting adjustment triggers and thresholds provided by system 230, controller 450 may output control signals to an actuator 470 (such as a hydraulic or electric motor) so as to adjust the speed of chopper 470 or the power of chopper 470. Based upon the received or derived harvesting condition triggers or thresholds, controller 450 may additionally or alternatively output control signals to actuator 472 (such as a hydraulic cylinder or a solenoid) to adjust the position of the chopper counter knife 445 as indicated by arrow 473, wherein the positioning affects the degree to which the residue is chopped by chopper 444. Based upon such comparison, control unit 450 may additionally or alternatively output control signals to actuator 474 (such as a hydraulic or electric motor) to adjust the speed of spreader 446 or the positioning of its vanes. Based upon such comparison, controller 450 may additionally or alternatively output control signals to actuator 476 adjusting the header height, may output control signals to actuator 478 or actuator 480 adjusting a threshing speed, separation speed, threshing clearance or sieve louver positions. Based upon such comparison, controller 450 may additionally or alternatively output control signals adjusting the speed of harvester 422 crossing a field or the rate at which crops are fed through harvester 422 by the various augers, conveyors and components of harvester 422.

As with harvesters 20 and 32 schematically illustrated above, harvesters 320 uses its transceiver 451 to transmit data points to central harvester control system 230 for generation of performance driven operational models and operational setting adjustment triggers or thresholds for harvester 320. Such data points may be transmitted in a wireless fashion from each of the harvesters 320 to system 230 using wireless transceivers 451 carried by each of such harvesters and a wireless co2mmunication network. As a result, such collection of data points by system 30 and the generation of the operational models for adjusting control thresholds may be carried out in real time across the multiple harvesters 320.

The data points transmitted from each of harvesters 320 to system 230 each comprise a set of data comprising a value for a performance parameter (P) achieved by the particular harvester and the associated harvesting condition variable (HC) and operational setting(OS) that were in existence or that were in use for the particular harvester at the same time that the value for the performance parameter was achieved. For example, one example data point may comprise the cleaning blower speed (the operational setting) and the temperature (harvesting condition variable) for particular harvester that resulted in the particular harvester having a particular degree of grain loss (the performance parameter). Each of the harvesters 320 may provide similar data points including their respective cleaning blower speeds, temperatures and grain loss values, wherein system 230 may use such data to generate a model correlating cleaning blower speed and temperature to grain loss and wherein the model may establish thresholds for adjusting the blower speed for a given temperature to optimize (reduce) grain loss. The data points transmitted to system 230 from the various harvesters 320 may comprise sets of values for various combinations of operational settings and harvesting condition variables along with the associated performance parameter.

Examples of performance parameters which may be optimized based upon operational settings for a given harvesting condition variable, as indicated by a model, include, but are not limited to, grain yield; weed seed promulgation; biomass yield; stubble height; harvester productivity; grain quality; residue quality; lost grain; and fuel efficiency. It should be appreciated that particular performance parameters, in some implementations, may concurrently serve as harvesting condition variables for optimizing other performance parameters. For example, one model may optimize grain yield. Another model may optimize lost grain or grain quality as a function of the current grain yield.

Examples of operational settings that may be adjusted pursuant to an individual model include, but are not limited to one or more of, header height; harvester speed, threshing speed, separating speed, threshing clearance, cleaning fan speed; chaffer positions, sieve positions, feed rate, reel position, reel speed, header belt speeds, deck plate positions, header speeds, chopper speed, chopper counter knife position, spreader speeds, and spreader vane positions. Such operational settings may be either input by an operator, established by the operational setting controller of the harvester or sensed/detected by various sensors on the harvester.

Examples of various harvesting condition variables that may be used as a basis for adjusting an operational setting or multiple operational settings to optimize a performance parameter or a group performance parameters include, but are not limited to, one or more of grain moisture; temperature; wind speed; wind direction; harvester roll; harvester pitch; current grain yield; current biomass yield; crop type; crop variety; soil moisture; soil type; row spacing; weed type; weed density, crop height, crop downstate, time of day, and sun angle. Such harvesting condition variables may be either input by an operator, sensed/detected by various sensors on the harvester or retrieved or obtained from a source or sensor external to the harvester. In some implementations, the harvester may retrieve particular harvesting condition variables specific to the harvester, such as the local temperature, wind speed or wind direction, time of day, sun angle or the like, from a private or public Internet source.

In some implementations, the data points transmitted from each of harvesters 320 to system 230 each comprise a set of data or values comprising a value for a performance parameter (P) achieved by the particular harvester and values for multiple different associated harvesting condition variables (HC) and an operational setting (OS) that were in existence or that were in use for the particular harvester at the same time that the value for the performance parameter was achieved. In some implementations, the data points each comprise a set of values comprising a value for a performance parameter achieved by the particular harvester, and value for a harvesting condition variable and values for multiple different operational settings of the harvester occurred or were in use for the particular harvester at the same time that the value for the performance parameter was achieved. In some implementations, the data points each comprise a set of values or a performance parameter achieved by the particular harvester and multiple values for multiple different operational settings and multiple different harvesting condition variables that were in existence or that were used by the particular harvester at the time that the value for the performance parameter was achieved. In such implementations, the performance parameter is a performance parameter to be optimized by the model that is to be based upon such data points.

In some implementations, the model to be generated using such data points is to optimize the values for multiple performance parameters. In such an implementation, the data points transmitted from each of harvesters 320 to system 230 may each comprise a set of data or values comprising multiple values for multiple different performance parameter (P) achieved by the particular harvester and the associated harvesting condition variable (HC) and operational setting(OS) that were in existence or that were in use for the particular harvester at the same time that the values for the performance parameters were achieved. For example, one example data point may comprise the cleaning blower speed (the operational setting) and the temperature (harvesting condition variable) for particular harvester that resulted in the particular harvester having a particular degree of grain loss (a first performance parameter to be optimized) and the first value for grain quality (the second performance value to be optimized). Each of the harvesters 320 may provide similar data points including their respective cleaning blower speeds, temperatures and grain loss values, wherein system 30 may use such data to generate a model correlating cleaning blower speed and temperature to grain loss and grain quality and wherein the model may establish thresholds for adjusting the blower speed for a given temperature to optimize (reduce) grain loss and enhance grain quality (which may be based upon grain cleanliness (the absence of MOG) and/or a lower level of broken grain).

The data points transmitted to system 230 from the various harvesters 320 may comprise sets of values for various combinations of operational settings and harvesting condition variables along with the associated performance parameters that are be to be optimized by an operational settings controller of a harvester using operational setting adjustment thresholds obtained from or derived from the generated model. In some implementations, the data points each comprise a set of values comprising a different values for multiple different performance parameters achieved by the particular harvester, a value for a harvesting condition variable and values for multiple different operational settings of the harvester occurred or were in use for the particular harvester at the same time that the values for the performance parameters were achieved. In some implementations, the data points each comprise a set of values comprising a different values for multiple different performance parameters achieved by the particular harvester, multiple values for multiple different harvesting condition variables and value for an operational setting of the harvester that occurred or were in use for the particular harvester at the same time that the values for the performance parameters were achieved. In some implementations, the data points each comprise a set of values comprising the multiple different values for the performance parameters achieved by the particular harvester and multiple values for multiple different operational settings and multiple different harvesting condition variables that were in existence or that were used by the particular harvester at the time that the values for the performance parameters were achieved.

Central harvester control system 230 generates performance driven operational models for harvesters 320 using the data points (sets of data values) received from harvesters 320. Such operational models serve as a basis for generating or deriving customized dynamic thresholds for triggering the adjustment of operational settings of harvesters 320. System 230 comprises processing unit 40 and a non-transitory machine-readable medium 42 (shown and described above with respect to Figure 1). It should be appreciated that system 230 may be distributed amongst multiple different processing units and non-transitory machine-readable mediums which cooperate with one another to carry out the functions of system 30. Medium 42 comprises performance model generation instructions 50 and operational setting control instructions 54.

As described above, performance model generation instructions 50 direct processing unit 40 to obtain the data points from harvesters 320 and, with machine learning, generate performance driven operational models 56 for harvester 320 using such data points. In some implementations, system 230 comprises a neural network that carries out such machine learning. The generated models serve as a basis for the establishment of dynamic and customized operational setting adjustment triggering thresholds used by harvester 320 in response to changing harvesting condition variables. In the example illustrated, the operational models 56 generated by system 230 are stored in medium 42 and are subsequently transmitted to harvester 320. In other implementations, the operational models, upon generation, are transmitted to the various harvesters to be controlled by the federated control system 310.

In some implementations, instructions 50 direct processing unit 40 to develop different performance driven operational models that are customized for particular geographic regions, particular types of crops, particular varieties of crops, particular periods of time, particular types or models of harvesters, particular soil types, particular growing conditions or other criteria. In contrast to generic thresholds established by a manufacturer or possibly guessed by an operator, the distinct customized performance driven operation models provide customized thresholds for triggering the adjustment of operational settings, wherein the customized thresholds more precisely control the timing and extent of operational setting adjustments to better optimize for performance parameters.

By way of example, instructions 50 may direct processing unit 40 to use machine learning to use data from multiple harvesters to develop an individual federated control model based upon data points solely received from harvesters operating within a particular geographic region. The federated control model may be based upon data points solely received from harvesters harvesting a particular type or variety of crop. The federated control model may be based upon data points received only from particular types or models of harvesters. The federated control model may be based upon data points only received during a particular window of time or only received from harvesters harvesting crops grown in certain soil types or under particular growing conditions. In some implementations, the federated control model may be based upon data points received only from those harvesters having or operating under a subset of the various harvesting condition variables. For example, the federated control model may be based upon data points received only from a particular type of harvester harvesting a particular type of crop in a particular region during a particular predefined window of time. In such implementations, instructions 50 may prefilter the data points received from harvesters 20 based the above criteria, wherein each model that is generated is based solely upon data points that satisfy particular criteria associated with the model.

For example, in one implementation, an individual model that is to be used for adjusting operational settings of the harvester 320 operating at a certain point in time may be based solely upon data points received from harvesters 320 during a window of time containing the certain point in time. In one implementation, the window of time may be a harvesting season. In another implementation, the window of time may be a shorter portion of the harvesting season, such as one day, one week, two weeks, four weeks or a month. For example, the generation of a model from which operational setting adjustment triggering thresholds are to be derived for adjustment of a harvester operating on August 1 may be generated based solely upon data points received from harvesters 320 that were operating during the month of July where the "freshness" of the model is based upon data that is no older than one month. In some implementations, individual models may be assigned a "freshness" date, indicating the last date for which operational setting adjustment triggering values derived from the model may be relied upon. The described example may be equally applied using other criteria other than a time window such as the criteria above including, but not limited to, type or variety of crop, geographic region, type or model of harvester, or any of the above described harvesting condition variables.

As discussed above, in some implementations, an individual data point may comprise values for multiple different performance parameters, multiple different harvesting condition variables and/or multiple different operational settings concurrently achieved or experienced by an individual harvester. In such implementations, instructions 50 may direct processing unit 40 to differently weight different values. In some implementations, different harvesting condition variables may be up assigned different weights based upon their predetermined impact or effect upon the particular performance parameter or group of performance parameters being optimized. Likewise, in some implementations, different operational settings may be assigned different weights based upon their predetermined impact or effect upon the particular performance parameter or group of performance parameters being optimized. For example, it may be determined, through empirical studies or prior analysis by system 30 that a particular harvesting condition variable, such as grain moisture, may have a larger impact or effect upon grain quality as compared to a different harvesting condition variable. In such an implementation, values pertain to grain moisture may be given a larger weight value as compared to the different harvesting condition variable. It may be determined, through empirical studies or prior analysis by system 230, that a particular operational setting, such as the speed of the blower, may have a larger impact or effect upon grain quality as compared to a different operational setting. In such implementations, values pertaining to the speed of the blower may have a greater assigned weight as compared to the different operational setting.

In some implementations, each performance parameter of the set of performance parameters may be assigned a different weight, a prioritization or a degree of importance, wherein the weight controls in circumstances where the optimization of multiple performance parameters may be competing with one another for different operational setting adjustments with a given harvesting condition variable or set of harvesting condition variables. In such implementations, the weights assigned to the performance parameters may be input by a manager or an operator based upon the manager's or operator's performance objectives. For example, an operator may place a higher importance on grain quality, clean grain, as compared to grain loss. In such a circumstance, the operator may sign a greater weight to the grain quality performance parameter and a lower weight to the grain loss performance parameter.

Operational setting control instructions 54 use the generated models to identify harvesting condition variable thresholds for the adjustment of operational settings of a harvester. Instructions 64 direct processing unit 40 to derive thresholds or triggers for making an adjustment to an operational setting or a group of operational settings based upon a current harvesting condition variable for us to optimize a particular performance parameter or a group of performance parameters. For example, an example model may correlate lower speed and crop moisture/grain moisture to grain quality. The particular model may indicate that for a given grain moisture, the blower directing air through the chaffer and sieve should be set at a particular speed to optimize grain quality. In such a circumstance, instructions 54 may determine or identify, from the model, the given grain moisture at which the blower should be adjusted to the particular speed to optimize grain quality. The adjustment triggering grain moisture harvesting condition variable derived from the model may be transmitted to a harvester, wherein the harvester, upon sensing or otherwise receiving signals indicating that the given grain moisture is occurring, automatically adjusts the speed of its blower to the particular speed.

As shown arrow 458 in Figure 4, harvester 320 transmits its harvesting condition variable or conditions (HC) to system 230, wherein system 30 compares the current harvesting condition variable of harvester 32 to the identified threshold and outputs operational setting adjustment instructions adjustment instructions to harvester 322. In other implementations, system 230 provides harvester 322 with the identified operational adjustment triggers or thresholds as indicated by arrow 458 (the operational setting as a function of harvesting condition variable (OS (HC)), wherein the harvester compares its current harvesting condition variables to the threshold and carries out the adjustment to at least one operational setting of the harvester. In yet other implementations, system 230 provides harvester 320 with the generated operational model 56 (shown in Figure 1), wherein instructions 54 are located on harvester 32 with the instructions directing a local processing unit on the harvester 320 to carry out the identification of operational setting adjustment threshold or triggers (OS(HC)) from the model 56 as well as the adjustment of operational settings using the identified threshold or triggers and the current existing harvesting condition variables experienced by harvester 320.

Although the present disclosure has been described with reference to example implementations, workers skilled in the art will recognize that changes may be made in form and detail without departing from the spirit and scope of the claimed subject matter. For example, although different example implementations may have been described as including features providing one or more benefits, it is contemplated that the described features may be interchanged with one another or alternatively be combined with one another in the described example implementations or in other alternative implementations. Because the technology of the present disclosure is relatively complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure. Although portions of the disclosure may use the phrase "at least one" or "one or more" of a particular component or element, unless otherwise specifically limited, the mere recitation of a single element or component does not preclude a plurality of such elements or components.

## Claims

1. A federated harvester control method comprising:
obtaining first data for at least one operational setting from each of a plurality of harvesters;
obtaining second data for at least one harvesting condition variable that was experienced by each of the plurality of harvesters concurrent with operation of the harvesters with the at least one operational setting;
obtaining third data for at least one performance parameter achieved by each of the plurality of harvesters operating with the at least one operational setting while experiencing the at least one harvesting condition variable;
generating, with machine learning, a performance driven operational model for harvester setting adjustment in response to harvesting condition variables based upon the first data, the second data and the third data; and
adjusting the least one operational setting of a particular harvester experiencing a particular harvesting condition variable using the operational model.

2. The method of claim 1, wherein the first data, the second data and the third data are obtained while each of the plurality of harvesters are in a geographic region, the operational model being valid for the geographic region, and wherein the adjustment to the setting of the particular harvester is made for operation of the particular harvester in the geographic region.

3. The method of claim 2 further comprising:
obtaining fourth data for the at least one operational setting from each of a second plurality of harvesters while operating in a second geographic region;
obtaining fifth data for the at least one harvesting condition variable experienced by each of the second plurality of harvesters concurrent with operation of the harvesters at the at least one operational setting;
obtaining sixth data for the at least one performance parameter achieved by each of the second plurality of harvesters operating with the at least one operational setting while experiencing the at least one harvesting condition variable;
generating, with machine learning, a second performance driven operational model for harvester setting adjustment in response to harvesting condition variables based upon the fourth data, the fifth data and the sixth data, the second performance driven operational model being valid for the second geographic region; and
adjusting a setting of a second particular harvester experiencing a second particular harvesting condition variable using the second operational wherein the adjustment to the setting of the second particular harvester is made for operation of the second particular harvester in the second geographic region.

4. The method of claim 1, wherein the at least one operational setting comprises a plurality of different operational settings.

5. The method of claim 4, wherein the plurality of different operational settings have different applied non-zero weighting factors.

6. The method of claim 1 further comprising receiving an operator selection of the at least one operational setting from amongst a larger number of selectable operational settings.

7. The method of claim 1, wherein the at least one operational setting comprises an operational setting selected from a group of operational settings consisting of: header height; harvester speed, threshing speed, separating speed, threshing clearance, cleaning fan speed; chaffer positions, sieve positions, feed rate, reel position, reel speed, header belt speeds, deck plate positions, header speeds, chopper speed, chopper counter knife position, spreader speeds, and spreader vane positions.

8. The method of claim 1, wherein the at least one harvesting condition variable comprises a plurality of different variables.

9. The method of claim 1 further comprising receiving an operator selection of the at least one harvesting condition variable from amongst a larger number of selectable harvesting condition variables.

10. The method of claim 1, wherein the at least one harvesting condition variable is selected from a group of variables consisting of: grain moisture; biomass moisture, temperature; humidity, wind speed; wind direction; harvester roll; harvester pitch; current grain yield; current biomass yield; crop type; crop variety; soil moisture; soil type; row spacing; weed type; weed density, crop height, plant health index, grain constituent levels, crop downstate, time of day, and sun angle strikes such.

11. The method of claim 1, wherein the at least one performance parameter comprises a plurality of performance parameters.

12. The method of claim 11, wherein the plurality of different performance parameters have different applied non-zero weighting factors.

13. The method of claim 1, wherein the performance driven operational model for harvester setting adjustment in response to harvesting condition variables is based upon a plurality of data points, each data point comprising the first data, the second data and the third data, wherein the plurality of data points are differently weighted based upon at least one of a time at which each data point was generated and a geographic location at which each data point was generated.

14. The method of claim 1 further comprising receiving an operator selection of the at least one performance parameter from amongst a larger number of selectable performance parameters.

15. The method of claim 1, wherein the at least one performance parameter comprises a performance parameter selected from a group of performance parameters consisting of: grain yield; weed seed promulgation; biomass yield; stubble height; harvester productivity; grain quality; residue quality; lost grain; and fuel efficiency.

16. The method of claim 1, wherein the data for at least one operational setting is sensed by each of the harvesters.

17. The method of claim 1, wherein the data for at least one of the at least one operational setting, the at least one harvesting condition variable or the at least one performance parameter is received through operator input.

18. The method of claim 1, wherein the first data, the second data and the third data are obtained within a predefined time window of less than four weeks.

19. A federated harvester controller comprising a non-transitory machine-readable medium containing instructions to direct a processing unit to:
obtain a plurality of data points from a plurality of different harvesters, each of the data points comprising at least one performance parameter, at least one associated harvesting condition variable and at least one operational setting, wherein the at least one performance parameter was achieved by the harvester while operating at the at least one operating setting under the at least one harvesting condition variable;
generate, with machine learning, a performance driven operational model for harvester setting adjustment in response to harvesting condition variables based upon the plurality of data points; and
transmit the operational model to an operational setting controller of a particular harvester for use in adjusting a setting of the particular harvester experiencing a particular harvesting condition variable. A harvester under federated control, the harvester comprising:
a header comprising a plurality of interacting crop gathering components for gathering a crop from the growing medium;
a separation unit comprising a plurality of interacting crop separation components for separating a targeted portion of the gathered crop from a non-targeted portion of the gathered crop; and
a controller to adjust at least one component of the crop gathering components and the crop separation components based upon a performance driven operational model generated through machine learning based upon operational setting data, harvesting condition variable data and performance data obtained from a plurality of other harvesters.
